# EUROPÄISCHE PATENTSCHRIFT

(11) **EP 1 633 620 B1**
(45) Veröffentlichungstag und Bekanntmachung des Hinweises auf die Patenterteilung: **05.12.2007**
(21) Anmeldenummer: 04741623.5
(22) Anmeldetag: 21.05.2004
(51) Int. Cl.: B62D 15/02

(54) **ANZEIGEEINHEIT UND VERFAHREN ZUR ANZEIGE EINES LENKRADEINSCHLAGS EINES FAHRZEUGS**
DISPLAY UNIT AND METHOD FOR DISPLAYING A STEERING ANGLE OF THE STEERING WHEEL OF A VEHICLE
UNITE INDICATRICE ET PROCEDE POUR INDIQUER L'ANGLE DE ROTATION DU VOLANT D'UN VEHICULE

(30) Priorität: 02.06.2003 DE 10324812
(43) Veröffentlichungstag der Anmeldung: 15.03.2006
(73) Patentinhaber: ROBERT BOSCH GMBH, 70442 Stuttgart (DE)
(72) Erfinder: BEUTNAGEL-BUCHNER, Uwe, 70186 Stuttgart (DE)
(86) Internationale Anmeldenummer: PCT/EP2004/050882
(87) Internationale Veröffentlichungsnummer: WO 2004/106145

(56) Entgegenhaltungen:
- EP-A- 1 087 360
- DE-A- 19 854 206
- FR-A- 2 685 275
- US-A- 4 743 883
- US-A- 4 931 930
- US-A1- 2002 128 754

## Beschreibung

### Stand der Technik

Die Erfindung geht aus von einer Anzeigeeinheit und einem Verfahren zur Anzeige eines zu ändernden Lenkradeinschlags eines Fahrzeugs nach der Gattung des Hauptanspruchs. Es sind schon Abstandswarner in Fahrzeugen bekannt, die bei Annäherung eines Fahrzeugs an ein Hindernis eine Warnung ausgeben. Diese Abstandswarner dienen insbesondere als Parkhilfen, wobei sie einem Fahrer vor allem bei engen Einparkbedingungen und ungünstigen Sichtbedingungen nützlich sind, wenn er die Fahrzeuggrenzen nicht abschätzen kann bzw. Hindernisse nicht erkennen kann. Darüber hinaus sind Systeme bekannt, die bei einer Vorbeifahrt eine Parklücke vermessen und im Anschluss das Fahrzeug durch Einwirkung auf den Triebstrang in die Parklücke hineinsteuern. Da solche Verfahren relativ aufwändig sind, sind auch Ausgabemittel bekannt, die lediglich Fahranweisungen an einen Fahrer ausgeben. So ist es zum Beispiel bekannt, einem Fahrer anzuzeigen, ob er zum Einparken vorausfahren soll, zurückfahren soll oder anhalten soll. Über die Pedalsteuerung kann dabei ein Fahrer die Fahrzeuggeschwindigkeit sehr genau dosiert regeln. Bei dem Einschlagen der Lenkung ist eine derart dosierte Regelung schwieriger, da Fahrgeschwindigkeit, Lenkgeschwindigkeit und aktueller Lenkradeinschlag berücksichtigt werden müssen. Während ein Fahrer die Fahrzeuggeschwindigkeit selbst erkennen und entsprechend reagieren kann, lässt sich für ihn der aktuelle Lenkradeinschlag nicht selbst erkennen, so dass auch eine Umsetzung einer Anweisung an einen Fahrer, die zum Beispiel gesprochen ausgegeben wird, schwierig ist. Daher wird ein Fahrer zum Einparken im Allgemeinen darauf angewiesen, die Lenkung in eine vorbestimmte Richtung im Stand voll einzuschlagen, bis zu einem Umkehrpunkt zu fahren, an dem er nun angewiesen wird, die Lenkung in die Gegenrichtung voll einzuschlagen. Durch den Volleinschlag ist das Einparken zeitaufwändig, wobei die Reifen durch den Volleinschlag im Stand zusätzlich belastet werden.

Aus der US 2002/0128754 A1 ist ein Fahrerassistenzsystem bekannt, bei dem in Abhängigkeit von einem eingeschlagenen Lenkwinkel und einer Fahrzeuggeschwindigkeit ein erwarteter Fahrweg des Fahrzeugs bestimmt und der Fahrweg in einer LCD-Anzeige dargestellt wird, entsprechend dem Oberbegriff des Anspruchs 1 und 11.

### Vorteile der Erfindung

Die erfindungsgemäße Anzeigeeinheit mit den Merkmalen des Hauptanspruchs hat demgegenüber den Vorteil, dass zur Darstellung eines zu ändernden Lenkradeinschlags des Fahrzeugs eine Vielzahl benachbart zueinander angeordneter Anzeigeelemente vorgesehen ist. Diese Anzeigeelemente sind derart ansteuerbar, dass sie in Abhängigkeit von dem zu ändernden Lenkradeinschlag beleuchtbar sind, um dem Fahrer die einzuschlagende Lenkrichtung anzuzeigen. Hierdurch kann ein Fahrer auf einfache Weise erfassen, ob eine Korrektur des Lenkradeinschlags erforderlich ist, bzw. ob sich das Fahrzeug in die richtige Richtung fortbewegt.

Durch die in den Unteransprüchen aufgeführten Maßnahmen sind vorteilhafte Weiterbildungen und Verbesserungen der im Hauptanspruch angegebenen Anzeigeeinheit möglich. Besonders vorteilhaft ist, lediglich ein Anzeigeelement oder eine Gruppe von Anzeigeelementen für eine Beleuchtung in Abhängigkeit davon auszuwählen, in welchem Umfang die Lenkrichtung geändert werden muss. Ein Fahrer erhält damit auf einfache Weise eine Information darüber, wie stark bzw. wie schnell er die Lenkrichtung ändern sollte.

Ferner ist vorteilhaft, die Anzeigeelemente im Bereich einer Instrumententafel des Fahrzeugs anzuordnen, da sie hier für einen Fahrer unmittelbar ersichtlich sind. Besonders vorteilhaft ist es dabei, die Anzeigeelemente am Rand einer Anzeigeeinheit anzuordnen, da sie hier nicht nur einfach montierbar sind, sondern auch gut erkennbar sind, während zugleich mit dem Rand der Anzeige ein im Allgemeinen nicht genutzter Anzeigenbereich mitgenutzt werden kann.

Es ist ferner vorteilhaft, die Anzeigeelemente in eine Skale einer Zeigeranzeige oder einer frei programmierbaren Anzeige vorzusehen, da hierdurch auf ein Anbringen zusätzlicher Anzeigelemente verzichtet werden kann. Damit dem Fahrer gegebenenfalls andere, notwendige Informationen angezeigt werden können, ist vorteilhaft eine Umschalteinheit zwischen einer Anzeige eines zu ändernden Lenkradeinschlags und anderen Anzeigen vorgesehen, wie zum Beispiel einer Geschwindigkeitsanzeige oder einer Motordrehzahlanzeige.

Ferner ist vorteilhaft, dass die Anzeigeelemente im Rückspiegel sichtbar sind bzw. für einen Fahrer, der sich umdreht, im Rückbereich des Fahrzeugs erkennbar sind bzw. dort angeordnet sind. Hierdurch ist es möglich, den Fahrer insbesondere bei einer Rückwärtsfahrt zu informieren, die auf Grund der hierbei vorherrschenden schlechteren Sichtverhältnisse besondere Anforderungen an den Fahrer stell.

Um die Orientierung des Fahrers zu erleichtern, wird die zu ändernde Lenkrichtung in Bezug auf einen Referenzpunkt dargestellt, so dass ein Fahrer durch einen Vergleich eines beleuchteten Anzeigeelements und des Referenzpunkts die Änderung des Lenkradeinschlags einfach erkennen kann.

Zur besseren Orientierung des Fahrers können die Anzeigeelemente vorteilhaft in Abhängigkeit von einem Betrag eines vorzunehmenden Lenkradeinschlags farblich und/oder räumlich unterschiedlich angesteuert werden, so dass ein Fahrer bereits aus der Position und/oder der Farbe eines beleuchteten Anzeigeelementes erkennen kann, wie der Lenkradeinschlag zu ändern ist. Es ist für ihn nicht erforderlich, zunächst den Sinngehalt einer Textanzeige oder eines Symbols zu erfassen.

In einer weiteren Ausführungsform wird die für die Anzeige des zu ändernden Lenkradeinschlags verwendete Anzeige auch dazu genützt, eine Parklückenlänge anzuzeigen. Somit kann sich ein Fahrer über die gleiche Anzeige zunächst über die Größe der Parklücke informieren, während ihm anschließend über die gleiche Anzeige bevorzugt angepasst an die Abmaße der Parklücke, Anleitungen gegeben werden, in diese Parklücke hineinzufahren.

Ferner ist es besonders vorteilhaft, ein Verfahren zum Betrieb einer erfindungsgemäßen Anzeigeeinheit dahingehend auszugestalten, dass die Änderung eines Lenkradeinschlags aus einem vorberechneten Fahrweg des Fahrzeugs ermittelt wird und dem Fahrer angezeigt wird. Damit kann sowohl ein Einparken, als auch ein automatisches Spurfolgen im Straßenverkehr berechnet und dem Fahrer ein von ihm nun zu folgender Fahrweg ausgegeben werden. Je nach Ausführung kann dabei ergänzend oder alternativ dem Fahrer angezeigt werden, wie eine Änderung des eingeschlagenen Lenkwinkels vorgenommen werden soll bzw. wie das Lenkrad absolut eingestellt werden soll.

### Zeichnung

Ausführungsbeispiele der Erfindung sind in der Zeichnung dargestellt und in der nachfolgenden Beschreibung näher erläutert. Es zeigen
- Figur 1: eine schematische Darstellung eines Fahrzeugs mit einer erfindungsgemäßen Anzeigeeinheit,
- Figur 2: eine Einparksituation eines Fahrzeugs in eine Parklücke,
- Figur 3: ein erstes Ausführungsbeispiel für eine erfindungsgemäße Anzeigeeinheit,
- Figuren 4 bis 9: weitere Ausführungsbeispiele für erfindungsgemäße Anzeigeeinheiten.

### Beschreibung des Ausführungsbeispiels

Die erfindungsgemäße Anzeigeeinheit kann für beliebige Fahrzeuge verwendet werden. Insbesondere ist die Verwendung in Kraftfahrzeugen vorteilhaft, bei denen im Allgemeinen die visuelle Orientierung des Fahrers für ein sicheres Fahren ausreicht. Eine Unterstützung ist jedoch in besonderen Situationen erforderlich, so dass einerseits eine Anzeigeeinheit zur Anzeige ein zu ändernder Lenkradeinschlag für den Fahrer gut sichtbar sein sollte, während sie ihn anderseits in dem Fall, dass er eine Unterstützung nicht benötigt, nicht stören sollte. Eine Unterstützung des Fahrers ist insbesondere dann erforderlich, wenn die Sichtverhältnisse nicht optimal sind. Die erfindungsgemäße Anzeigeeinheit kann z.B. dazu verwendet werden, dem Fahrer eine Information darüber zu geben, das Fahrzeug bei schlechten oder unübersichtlichen Sichtverhältnissen auf einer von einer Fahrzeugsensorik erfassten bzw. von einem Rechner bestimmten Fahrspur zu halten. Zum Beispiel bei einem Einparkvorgang ist es für den Fahrer gegebenenfalls schwierig, die Außenmaße des Fahrzeugs abzuschätzen und Hindernisse in der Umgebung des Fahrzeugs zu erkennen. Außerdem muss ein Fahrer, um auch kleinere Parklücken nutzen zu können, die jedoch für sein Fahrzeug ausreichen, möglicherweise näher an Hindernisse heranfahren als es für den Fahrer ansonsten üblich ist. Im Folgenden wird die erfindungsgemäße Anzeigeeinheit daher am Beispiel eines Einparksystems erläutert. Für eine erfindungsgemäße Anzeigeeinheit sind beliebige Anordnungsmöglichkeiten im Fahrzeug vorstellbar. Im Folgenden wird insbesondere die Anordnung einer erfindungsgemäßen Anzeigeeinheit im Sichtbereich vor dem Fahrer erläutert.

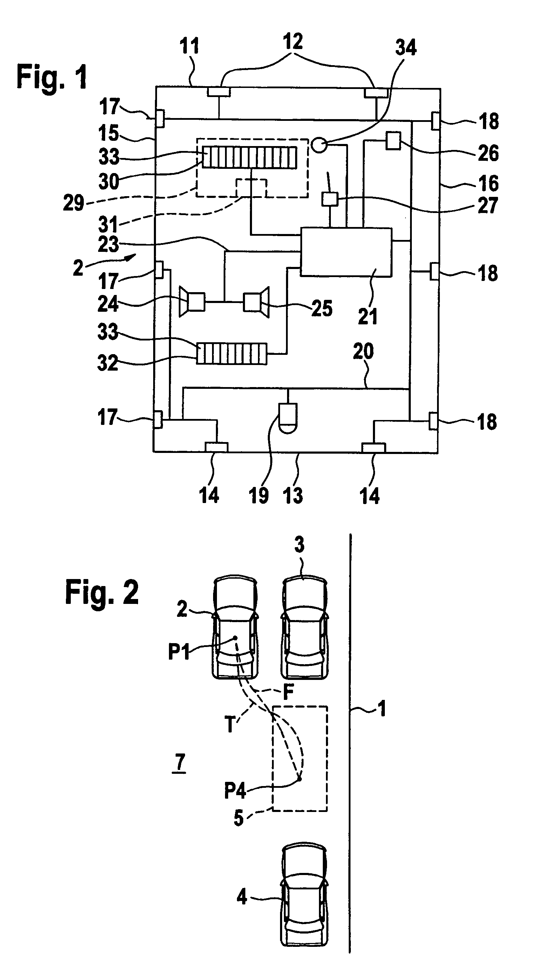

In der Figur 1 ist ein Fahrzeug 2 schematisch dargestellt, das über Sensoren zur Erfassung der Fahrzeugumgebung verfügt. An der Fahrzeugvorderseite 11 sind Sensoren 12 zur Erfassung des Fahrraums vor dem Fahrzeug angeordnet. Ebenso sind an der Fahrzeugrückseite 13 Sensoren 14 zur Überwachung des Fahrzeugsrückraums angeordnet. Die Sensoren 12, 14 dienen dazu, Hindernisse vor bzw. hinter dem Fahrzeug zu erfassen. Sowohl an der linken Fahrzeugseite 15, als auch an der rechten Fahrzeugseite 16 sind ebenfalls Sensoren 17 bzw. 18 angeordnet, die einerseits dazu dienen, Hindernisse seitlich des Fahrzeugs zu erfassen, so dass gegebenenfalls an den Fahrer eine Warnung ausgegeben werden kann. Die seitlich angeordneten Sensoren 17, 18 dienen aber andererseits auch dazu, eine Parklückengröße, insbesondere eine Länge von Parklücken, die seitlich zur Straße verlaufen, zu erfassen, um eine Entscheidung treffen zu können, ob die Parklücke für ein Einparken des Fahrzeugs 2 geeignet ist. Hierzu messen, zum Beispiel an der rechten Fahrzeugseite, die Sensoren 18 den Abstand des Fahrzeugs 2 zu geparkten Fahrzeugen. Fährt das Fahrzeug 2 an einer Parklücke vorbei, so vergrößert sich der gemessene Abstand, so dass bei der Vorbeifahrt die Länge der Parklücke bestimmt werden kann. Zur Hinderniserfassung strahlen die Sensoren 12, 14, 17, 18 möglichst breite Signalkeulen aus, die bevorzugt die gesamte Fahrzeugumgebung überstreichen. Finden sich Hindernisse in dieser Umgebung, werden die Signale reflektiert und von dem aussendenden Sensor oder einem anderen Sensor aufgefangen. Die Sensoren sind hierzu bevorzugt als Ultraschallsensoren ausgeführt. Es können jedoch auch elektromagnetische Wellen ausgestrahlt werden, so dass die Sensoren als Radar- bzw. Lidarsensoren arbeiten. In einer weiteren Ausführungsform ist es auch möglich, dass eine Kamera 19 das Fahrzeugumfeld beobachtet.

Die Sensoren sind über eine Datenbus 20 mit einer Steuereinheit 21 verbunden. Die Steuereinheit 21 wertet die von den Sensoren 12, 14, 17, 18 übertragenen Signale sowie gegebenenfalls die von der Kamera 19 übertragenen Signale aus und überprüft in einer ersten Betriebsart, ob eine Kollisionsgefahr für das Fahrzeug besteht, wenn der Abstand zu einem Hindernis in der Umgebung des Fahrzeugs zu gering geworden ist. Zur Fahrerwarnung ist die Steuereinheit 21 mit einer Vielzahl von Ausgabeeinheiten verbindbar. So ist in einer bevorzugten Ausführungsform eine akustische Ausgabe 23 mit einem ersten Lautsprecher 24 und einem zweiten Lautsprecher 25 an die Steuereinheit 21 angeschlossen. Bevorzugt sind die Lautsprecher 24, 25 richtungszugeordnet am Fahrzeug angebracht, so dass eine Warnung vor einem Hindernis links des Fahrzeugs über den links angeordneten ersten Lautsprecher 24 und eine Warnung vor einem Hindernis an der rechten Fahrzeugseite über den rechts angeordneten zweiten Lautsprecher 25 ausgegeben wird. Hierdurch ist eine räumliche Zuordnung des Hindernisses zu einer Fahrzeugrichtung durch den Fahrer möglich. Um die Sensorsignale Punkten an der Fahrstrecke des Fahrweges zuordnen zu können, ist die Steuereinheit 21 mit einem Wegstreckenmesser 26 verbunden. Um zu überprüfen, ob das Fahrzeug vorwärts oder rückwärts fahren soll, ist die Steuereinheit 21 zudem mit einer Erfassungseinheit 27 zur Ermittlung einer Stellung des Gangwahlhebels verbunden. Ist ein Vorwärtsgang eingelegt, so ist damit zu rechnen, dass das Fahrzeug vorwärts fahren soll, sodass die Sensoren an der Vorderseite 11 aktiviert werden. Bei einem Rückwärtsfahren werden insbesondere die an der Fahrzeugrückseite 13 des Fahrzeugs angeordneten Sensoren abgefragt.

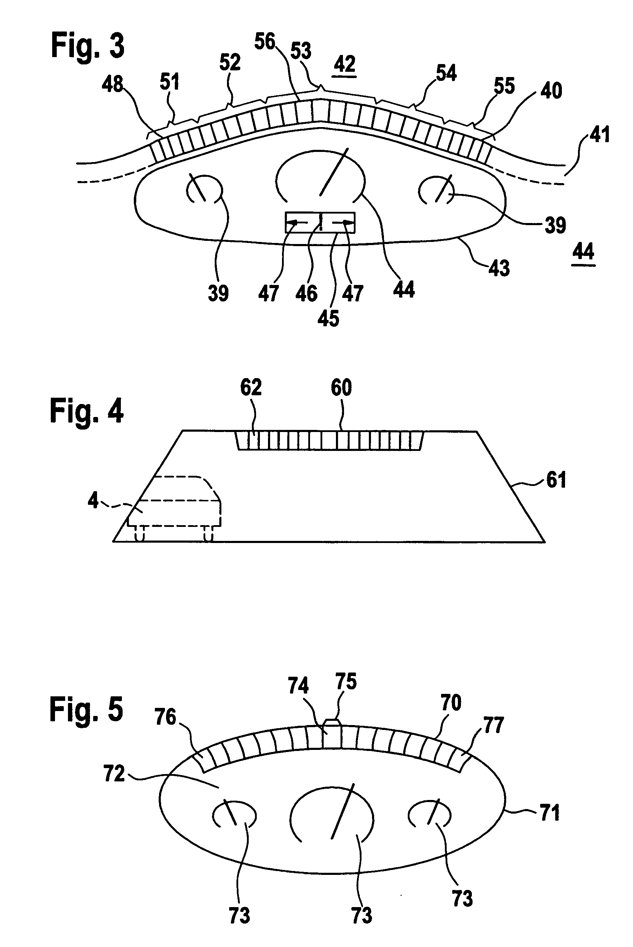

Neben einer reinen Abstandsmessung ist es vorgesehen, dass die Steuereinheit 21 dazu ausgelegt ist, einen Einparkweg des Fahrzeugs in eine Parklücke zu bestimmen. Die Länge und gegebenenfalls auch die Breite der Parklücke wird zuvor bei einem Vorbeifahren des Fahrzeugs 2 an der Parklücke zum Beispiel mittels der an der rechten Fahrzeugseite 16 angeordneten Sensoren 18 bestimmt. Über den Wegstreckenmesser 26 wird die Position des Fahrzeugs während der Vorbeifahrt jeweils gegenüber der Parklücke ebenfalls bestimmt. Ferner wird der Abstand des Fahrzeugs 2 zu geparkten Fahrzeugen ebenfalls über die Sensoren 18 bestimmt. Die Steuereinheit 21 berechnet aus diesen Daten eine Einparktrajektorie, der das Fahrzeug ausgehend von einer Startposition aus folgen soll. Das Fahrzeug wird hierbei derartig geführt, dass es nicht mit den geparkten Fahrzeugen kollidiert und dass es möglichst ohne unnötiges Rangieren in die Parklücke hineingeführt wird. Eine erfindungsgemäße Situation ist in der Figur 2 dargestellt. Das in der Figur 1 schematisch gezeigte Fahrzeug 2 ist auf einer Straßenfläche 7 an einem ersten geparkten Fahrzeug 4 und an einer Parklücke zwischen dem ersten geparkten Fahrzeug 4 und einem zweiten an einem Straßenrand 1 geparkten Fahrzeug 3 vorbeigefahren. Hierbei haben die Sensoren 18 den Abstand zwischen dem ersten geparkten Fahrzeug 4 und dem zweiten geparkten Fahrzeug 3 gemessen. Die Steuereinheit 21 hat ermittelt, dass zwischen den beiden geparkten Fahrzeugen 3, 4 eine Parklücke 5 frei ist, in die das Fahrzeug 2 einfahren kann. Dass eine geeignete Parklücke vorliegt, wird dem Fahrer entweder über eine akustische Ausgabeeinheit 23 oder über eine Anzeigeeinheit ausgegeben. Der Fahrer hält nun an der durch die Fahrzeugmitte gekennzeichneten Position P1 an. Die Steuereinheit 21 gibt dem Fahrer nun aus, wie er das Fahrzeug zu lenken hat. Die Ausgabe erfolgt über eine in der Figur 1 dargestellte Anzeigeeinheit 30, die anhand der Figuren 3 bis 9 im Folgenden erläutert wird.

In einer Ausführungsform ist die Anzeigeeinheit 30 Teil einer größeren Anzeigeeinheit 29. Gegebenenfalls ist eine Umschalteeinheit 31 vorgesehen, die bei dem erfindungsgemäßen Betrieb der Anzeigeeinheit 30 ein Bildsignal von der Steuereinheit 21 zu der Anzeigeeinheit 30 durchschaltet. In einer weiteren Ausführungsform ist im Fahrzeugrückbereich ergänzend oder alternativ eine Anzeigeeinheit 32 vorgesehen, die derart für den Fahrer sichtbar ist, dass er sich, falls er sich herumdreht, um den Einparkweg in die Parklücke 5 beobachten zu können, diese Anzeige in seinem Blickfeld sieht. Die Anzeigeeinheiten 30, 32 verfügen über einzelne Anzeigeelemente 33, die in der Figur 1 lediglich schematisch dargestellt sind und von denen nur ein Anzeigefeld mit einem Bezugszeichen jeweils versehen ist. Die Anzeigefelder sind wählbar beleuchtbar, so dass durch eine wählbare Beleuchtung eines Anzeigefelds oder einer Gruppe von benachbarten Anzeigefeldern dem Fahrer eine Information darüber gegeben wird, in welchem Umfang und in welcher Richtung er die Lenkung des Fahrzeugs einschlagen muss, um möglichst einer bequemen Einparktrajektorie F folgen zu können, um in die Parklücke 5 einzuparken. Im Extremfall wäre auch eine Einparktrajektorie T möglich, die jedoch einen Vollausschlag der Lenkung erfordert. Bevorzugt soll der Fahrer durch die Anzeigeeinheit so gelenkt werden, dass er möglichst auf einen Vollausschlag der Lenkung verzichten kann. Das Fahrzeug wird bevorzugt so lange geführt, bis es in der idealen Einparkposition P4 zum Stehen kommt.

In der Figur 3 ist ein erstes Ausführungsbeispiel für eine erfindungsgemäße Anzeigeeinheit 40 dargestellt. Die Anzeigeeinheit 40 ist in einen Rand 41 einer Instrumententafel integriert, die vor dem Fahrer des Fahrzeugs angeordnet ist. Die Anzeigeeinheit 40 befindet sich damit zwischen der Windschutzscheibe 42 und einem Anzeigeinstrument 43, das in die Instrumententafel 44 eingelassen ist. Die Anzeigeeinheit 40 ist dabei bevorzugt an einer Vorderkante einer Abdeckung angeordnet, die die Instrumententafel 44 an der Oberseite abschließt und damit das Anzeigeinstrument 43 abdeckt. Das Anzeigeinstrument 43 dient zur Anzeige weiterer wichtiger Fahrzeugdaten, wie zum Beispiel der Fahrzeuggeschwindigkeit oder der Motordrehzahl. Hierzu sind Zeigerinstrumente 39 in dem Anzeigeinstrument 43 angeordnet. Ergänzend zu der erfindungsgemäßen Anzeigeeinheit 40 ist ein variables Anzeigefeld 45 vorgesehen, in dem ein Warnsymbol 46 und/oder Richtungspfeile 47 anzeigbar sind, die die Anzeige mittels der Anzeigeeinheit 40 ergänzen bzw. erläutern. Gegebenenfalls kann zusätzlich eine entsprechende Anzeige, wie in dem variablen Anzeigefeld 45, auf einen Betrieb der Anzeigeeinheit 40 hinweisen.

Im Folgenden ist die Funktionsweise der Anzeigeeinheit 40 erläutert. Die Anzeigeeinheit 40 besteht aus benachbart angeordneten, einzelnen Anzeigeelementen 48, von denen aus Gründen der Übersichtlichkeit der Zeichnung lediglich eines mit einem Bezugszeichen versehen ist. In einer bevorzugten Ausführungsform sind die einzelnen Anzeigeelemente 48 als einzeln ansteuerbare leuchtende oder als einzeln beleuchtbare Felder ausgestaltet. In einer ersten Ausführungsform ist hierzu eine Leuchtdiode hinter einem zugeordneten Abdeckfenster angeordnet. Gegebenenfalls kann auch die Leuchtdiode unmittelbar in den Rand 41 der Instrumententafel 44 eingelassen sein. Die Anzeigeeinheit 40 wird von der in der Figur 3 nicht dargestellten Steuereinheit angesteuert, die sich bevorzugt innerhalb der Instrumententafel 44 befindet.

In einer ersten Ausführungsform sind die Anzeigeelemente wie folgt angeordnet, wobei im Folgenden die Anordnung von einem linken Rand der Anzeigeeinheit 40 zu einem rechten Rand der Anzeigeeinheit beschrieben ist. Die einzelnen Anzeigefelder sind hierbei entweder unmittelbar benachbart oder zumindest eng beabstandet zueinander angeordnet. An der linken Seite ist zunächst eine erste Gruppe 51 von fünf roten Leuchtfeldern vorgesehen. Hieran schließt sich nach rechts eine zweite Gruppe 52 von fünf gelben Leuchtfeldern an. Zentriert ist eine dritte Gruppe von Leuchtfeldern 53 angeordnet, die sieben grüne Leuchtfelder umfasst. Hieran schließt sich nach rechts eine vierte Gruppe 54 mit fünf gelben Leuchtfeldern an. Nach rechts schließt sich wiederum eine fünfte Gruppe 55 von fünf roten Leuchtfeldern an. Die jeweilige Anzahl ist als eine bevorzugte Ausführungsform vorgesehen, wobei je nach Ausführung mehr oder auch weniger Leuchtfelder vorgesehen sein können. An Stelle einer beschriebenen farblichen Zuordnung, grün mittig, nach außen hin gelb und rot verlaufend, können die Leuchtfelder auch alle in einer Farbe dargestellt werden.

Der Betrieb der erfindungsgemäßen Anzeigeeinheit 40 erfolgt nun in einer ersten Ausführungsform in der Weise, dass die Steuereinheit 21 eine Richtung des Fahrzeugs und einen in dieser Richtung erforderlichen Lenkradeinschlag bestimmt, die das Fahrzeug fahren soll, zum Beispiel, um bei einem Einparken um ein Hindernis herumgesteuert zu werden, ohne das eine Kollision erfolgt. Dieser erwartete Lenkwinkel wird mit dem Lenkwinkel verglichen, der über einen Lenkwinkelsensor 34 bestimmt wird. Die Steuereinheit 21 bestimmt die Differenz zwischen dem eingestellten und dem zu erwartenden Lenkwinkel. Diese Differenz kann nun bedeuten, dass die eingeschlagene Lenkrichtung nach links oder nach rechts geändert werden muss. Ferner kann die Lenkrichtung auch beibehalten werden. Ist genau die Lenkrichtung eingeschlagen, die das Fahrzeug fahren soll, so wird ein mittleres Anzeigeelement 56 betrieben, das sich mittig in der dritten Gruppe 53 befindet. Ist eine Abweichung nach links erforderlich, so wird ein Leuchtfeld links von dem mittigen Anzeigeelement 56 angesteuert, während bei einer erforderlichen Lenkradeinschlagsänderung nach rechts ein Beleuchtungsfeld rechts von dem mittleren Element 56 angesteuert wird. In einer ersten Ausführungsform ist die Position des Leuchtelementes, das dabei jeweils angesteuert wird, von den Abständen des Fahrzeugs zu Hindernissen in der Fahrzeugumgebung abhängig. Ein Leuchtelement innerhalb der dritten Gruppe 53 wird dann angesteuert, wenn eine Änderung des Lenkradeinschlags zwar vorgenommen werden kann, die gewünschte Position jedoch auch ohne Änderung eines Lenkradeinschlags erreicht wird. Der Fahrer kann nun nachregeln, muss dies aber nicht vornehmen. Eine Ansteuerung eines der Leuchtelemente innerhalb der zweiten bzw. vierten Gruppe 52, 54 wird dann vorgenommen, wenn ein Fahrzeug zwar kollisionsfrei um Hindernisse herumfährt, ohne dass eine Lenkänderung vorgenommen wird, hierbei jedoch ein erster Sicherheitsabstand zu Hindernissen unterschritten wird. Dem Fahrer wird damit geraten, eine entsprechende Lenkänderung vorzunehmen. Leuchtet ein Leuchtelement innerhalb der ersten bzw. innerhalb der fünften Gruppe 51, 55 auf, so ist der Fahrer durch die Anzeigeeinheit davor gewarnt, dass bei einer ungeänderten Weiterfahrt eine Kollision erfolgen wird. Bereichsgrenzen werden dabei in Abhängigkeit von den gemessenen Hindernisdaten des Fahrzeugs festgelegt, wobei den einzelnen Beleuchtungselementen jeweils Einschlagswinkel des Lenkrads zugeordnet werden und eine Wegekurve des Fahrzeugs für den jeweiligen, zugeordneten Lenkradeinschlagswinkel berechnet wird. Ferner wird erfasst, ob das Fahrzeug innerhalb des Sicherheitsabstandes um ein Hindernis herumfährt, ob der Sicherheitsabstand unterschritten wird oder ob eine Kollisionsgefahr besteht. In einer anderen Ausführungsform ist es auch möglich, dass ausgehend von dem mittleren Element 56 jedem Beleuchtungselement nach links und nach rechts jeweils eine feste Lenkänderung von vorzugsweise 5 Grad zugeordnet wird. Ist zum Beispiel eine Einschlagsänderung von 20 Grad nach links erforderlich, so wird ein Beleuchtungselement fünf Felder links von dem mittleren Anzeigeelement 56 betrieben.

Die beschriebene farbliche Beleuchtung der einzelnen Beleuchtungselemente ist möglich, jedoch nicht zwingend erforderlich. So können auch alle Felder gleichfarbig angesteuert werden. An Stelle von Leuchtdioden können auch Glühlampen oder andere Lichtquellen eingesetzt werden.

Eine Korrektur durch den Fahrer erfolgt nun in der Weise, dass er, falls zum Beispiel ein Element innerhalb der zweiten Gruppe 52 von Beleuchtungselementen betrieben wird, das Lenkrad nach links dreht. Mit der Drehung des Lenkrades nach links verschiebt sich die Elementenbeleuchtung. Durch die Zuordnung einer Elementenbeleuchtung zu einem Drehwinkel des Lenkrades wird entsprechend der Drehung jeweils die Beleuchtung nach und nach um ein Feld nach rechts verschoben. Der Fahrer kann das Lenkrad dann so lange drehen, bis das mittlere Anzeigeelement 56 erreicht ist. Nun kann der Fahrer geradeaus weiterfahren.

In einer anderen Ausführungsform kann durch den Betrieb des Beleuchtungselementes nicht eine notwendige Korrekturrichtung, sondern gerade der Falscheinschlag angezeigt werden. Eine Korrektur erfolgt dabei in der Weise, dass der Fahrer das Lenkrad in die Gegenrichtung dreht, bis das mittlere Anzeigeelement 56 bzw. zumindest eines der Beleuchtungselemente innerhalb der dritten Gruppe 53 erreicht ist. Wird zum Beispiel ein Beleuchtungselement der vierten Gruppe 54 betrieben, so sollte der Fahrer in dieser Betriebsart das Lenkrad so lange nach links drehen, bis die beleuchtete Anzeigemarke das mittlere Beleuchtungselement bzw. eines der Beleuchtungselemente innerhalb der dritten Gruppe 53 erreicht hat.

Die Lenkempfehlung wird bevorzugt für ein stehendes oder zumindest für ein langsam fahrendes Fahrzeug gegeben. Bewegt sich das Fahrzeug zu schnell, so wird über das variable Anzeigefeld 45 bzw. über die akustische Ausgabeeinheit 23 eine Warnung an den Fahrer ausgegeben, dass er sich für eine Lenkkorrektur zu schnell bewegt. Er kann darauf hin das Fahrzeug verzögern, so dass er die Korrektur vorschriftsgemäß ausführen kann.

In einer bevorzugten Ausführungsform wird für die Anzeige einer Lenkradkorrektur jeweils nur eines der Anzeigeelemente 48 der Anzeigeeinheit 40 betrieben. Gegebenenfalls können bei einem Umschalten von einem Beleuchtungsfeld zu dem nächsten Beleuchtungsfeld auch beide Beleuchtungsfelder betrieben werden. In einer weiteren Ausführungsform wird für eine bessere Erkennbarkeit jeweils eine Gruppe von Beleuchtungsfeldern angesteuert, zum Beispiel stets drei bis vier Beleuchtungsfelder, die über die von den benachbarten Beleuchtungsfeldern gebildete Skala entsprechend einer Bewegung einzelner Beleuchtungsfelder wandern.

In einer weiteren Ausführungsform wird die Anzeigeeinheit 40 vor Beginn eines Einparkvorgangs dazu verwendet, dem Fahrer anzuzeigen, ob ein Einparken nur knapp möglich ist, oder ob ein Einparken eher problematisch sein könnte. Versucht ein Fahrer in einer relativ zu seinem eigenen Fahrzeug großen Parklücke einzuparken, so werden zur Bereitstellung der notwendigen Lenkbewegung alle verfügbaren Leuchtdioden verwendet. Versucht ein Fahrer im Gegensatz dazu, in eine relativ kleine Parklücke einzuparken, so wird im durch eine verringerte Anzahl von betriebenen Leuchtfeldem visuell mitgeteilt, dass die Parklücke klein ist.

Hintergrund ist dabei, dass ein Einparken in eine kleine Parklücke wesentlich sensitivere Lenkbewegungen erfordert, da der zur Verfügung stehende Fahrschlauch wesentlich schmaler ist, da von einer idealen Trajektorie zum Einparken nur wesentlich geringere Abweichungen möglich sind So kann bei einer großen Parklücke der gesamte Anzeigebereich von jeweils fünf roten, fünf gelben und sieben grünen Leuchtfeldern betrieben werden. Ist die Parklücke kleiner, so werden nur jeweils drei rote, drei gelbe und fünf grüne Leuchtfelder betrieben, wobei zwischenliegende Leuchtfelder jeweils übersprungen werden. Bei einer leichten Bewegung des Lenkrades gegenüber einer großen Parklücke wandert also das beleuchtete Leuchtfeld wesentlich schneller über die Anzeigeeinheit 40. Bei einer kleinen Parklücke wird lediglich jeweils eine rote, jeweils eine gelbe und drei grüne Leuchtfelder betrieben. Ist die Parklücke im Grenzbereich und ist nur eine sehr schmale Trajektorie möglich, so muss der Fahrer der Ideallinie folgen. Daher wird nur jeweils eine rote und in der Mitte die grüne Leuchtdiode 53 betrieben, wenn er sich auf der Ideallinie befindet. Ist die Parklücke zu klein, so können zum Beispiel die roten Leuchtdioden am Rand blinken, so dass dem Fahrer signalisiert wird, dass ein Einparken nicht möglich ist.

Während des Einparkvorgangs wird bevorzugt die Einparktrajektorie von der Steuereinheit 21 stets aktualisiert und neu berechnet, so dass eine Anpassung an geänderte Hindernisse, zum Beispiel ein Vorsetzen oder ein Zurücksetzen des hinteren, ersten geparkten Fahrzeugs 4, bei der Berechnung der Einparktrajektorie berücksichtigt werden kann.

In einer bevorzugten Ausführungsform wird die optische Anzeige durch eine akustische Anzeige bzw. durch akustische Warnungen über die akustische Ausgabeeinheit 23 ergänzt.

In der Figur 4 ist ergänzend oder alternativ eine weitere Ausführungsform dargestellt, bei der eine erfindungsgemäße Anzeigeeinheit 60 an einer Heckscheibe 61 des Fahrzeugs montiert ist. Wenn der Fahrer zurücksetzt, erfasst die Ganghebelerfassung 27 ein Einlegen eines Rückwärtsgangs. Der Fahrer wird sich dann entweder herumdrehen, um den rückwärtigen Fahrraum durch die Heckscheibe 61 beobachten zu können, oder der Fahrer schaut in den Rückspiegel, so dass er die Heckscheibe 61 über den Blick in den Rückspiegel erfasst. Jedenfalls ist sein Blick im Allgemeinen nicht auf das Anzeigeinstrument 43 bzw. auf eine dort angeordnete Anzeigeeinheit gerichtet. Damit der Fahrer auch in diesem Fall eine Information über ein Einlenken in vorteilhafter optischer Weise erhalten kann, weist die Anzeigeeinheit 60 ebenfalls benachbarte Anzeigefelder 62 auf, die in erfindungsgemäßer Weise zum Anzeigen einer Änderung der Lenkrichtung angesteuert werden. In einer bevorzugten Ausführungsform ist die Anzeigeeinheit 60 am Fahrzeugdach bzw. an einem Rand der Heckscheibe 61 angeordnet. Während der Fahrer den rückwärtigen Fahrraum, zum Beispiel das erste geparkte Fahrzeug 4, beobachten kann, hat er zugleich die Anzeigeneinheit 60 im Blick. In einer ersten Ausführungsform ist die Anzeigeeinheit 60 entsprechend der Anzeigeeinheit 40 an der Instrumententafel 44 ausgerührt. In einer weiteren Ausführungsform kann die Anzahl der Beleuchtungsfelder in der Anzeigeeinheit 60 jedoch auch geringer sein, um den erforderlichen Einbauraum möglichst klein zu halten.

In der Figur 5 ist ein weiteres Ausführungsbeispiel für eine erfindungsgemäße Anzeigeeinheit 70 dargestellt. Die Anzeigeeinheit 70 ist hierbei in ein Anzeigeinstrument 71 integriert. In einer ersten Ausführungsform sind hierzu Leuchtfelder in eine Zifferblattoberfläche 72 des Anzeigeinstruments 71 eingelassen, die durch entsprechende Lichtquellen einzeln ansteuerbar hinterleuchtbar sind. Neben der Anzeigeeinheit 70 sind an dem Anzeigeinstrument Zeigerinstrumente 73 angeordnet. In der hier gezeigten Ausführungsform ist die Anzeigeeinheit 70 an einem oberen Rand des Anzeigeinstruments 71. Gegebenenfalls ist die Anzeigeeinheit 70 aber auch in einer in der Zeichnung nicht gezeigten Form an einem unteren Rand des Anzeigeinstruments 71 angeordnet. Anhand der in der Figur 5 gezeigten Ausführungsform wird eine bevorzugte Ausbildung einer erfindungsgemäßen Anzeigeeinheit erläutert. Ein mittleres Anzeigefeld 74 ist in der Figur 5 durch eine Markierung 75 hervorgehoben. Das mittlere Anzeigefeld 74dient als ein Referenzpunkt, das eine ideale Lenkrichtung anzeigt. Wird ein Leuchtfeld außerhalb der Mitte betrieben, so kann sich ein Fahrer anhand der Differenz zwischen dem betriebenen Leuchtfeld und dem mittleren Anzeigefeld 74 orientieren, um den Grad einer zu ändernden Lenkrichtung ablesen zu können. Hierzu ist das mittlere Anzeigefeld 74bevorzugt durch eine Markierung 75 hervorgehoben. In einer weiteren Ausführungsform kann das mittlere Anzeigefeld 74auch stets beleuchtet werden, so dass sowohl das mittlere Anzeigefeld 74, als auch der Referenzpunkt für einen Fahrer erkennbar sind.

In einer weiteren Ausführungsform wird mittels der Anzeigeeinheit 70 nicht die relative Änderung einer Lenkrichtung, sondern die absolute Lenkrichtung sowie ein empfohlener Lenkradeinschlag dargestellt, so dass ein erstes Feld der Anzeigeeinheit zum Beispiel in einer ersten Farbe betrieben wird, um den aktuellen Lenkradeinschlag anzuzeigen, während ein zweites Feld in einer zweiten Farbe betrieben wird, um demgegenüber einen gewünschten Lenkradeinschlag darzustellen. Das äußerst linke Anzeigefeld 76 dient dabei dazu, einen Vollausschlag nach links darzustellen, während das äußerst rechte Anzeigefeld 77 dazu dient, einen Vollausschlag nach rechts dazustellen. Der Fahrer erhält somit eine absolute Anzeige des einzuschlagenden Lenkradwinkels, während er andererseits aus der Differenz zwischen dem eingestellten Lenkwinkel und dem wahrzunehmenden Lenkwinkel eine Information über einen zu ändernden Lenkradeinschlag erhält.

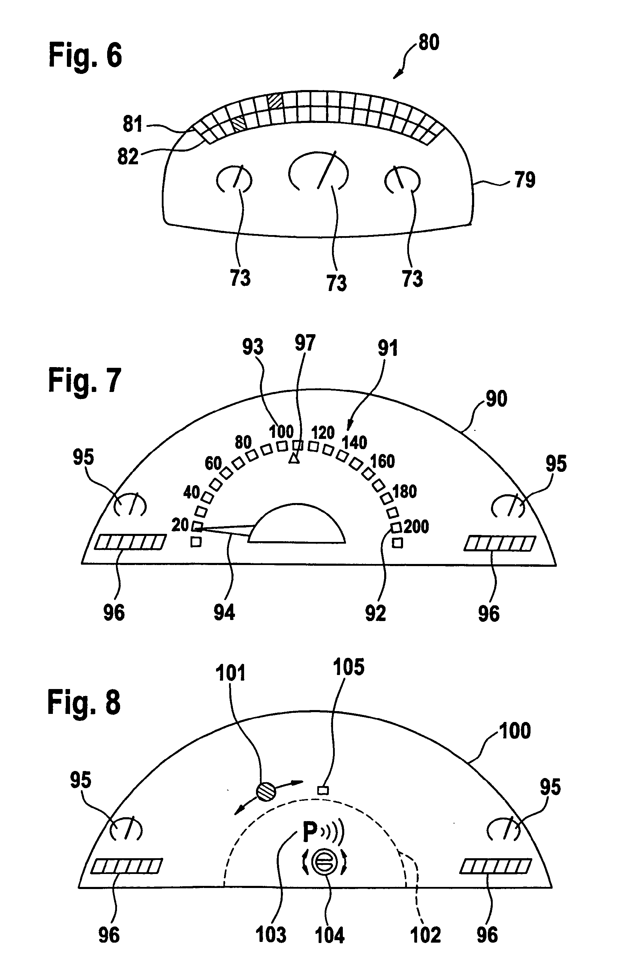

In der Figur 6 ist hierzu ein weiteres Ausführungsbeispiel dargestellt, bei dem in einer erfindungsgemäßen Anzeigeeinheit 80, die in ein Anzeigeinstrument 79 integriert ist, in einer ersten Skala 81 ein aktueller Lenkwinkel dargestellt wird, während benachbart hierzu in einer zweiten Skala 82 ein einzuschlagender Lenkwinkel dargestellt ist. Durch eine Drehung des Lenkrades kann der Fahrer nun die Markierung in der zweiten Skala 82 mit der Markierung in der ersten Skala 81 in Deckung bringen, um dem berechneten Fahrweg folgen zu können.

In der Figur 7 ist ein weiteres Ausführungsbeispiel einer erfindungsgemäßen Anzeigeinheit gezeigt. Die Darstellung erfolgt hierbei in einem Anzeigeinstrument 90, das eine Skalenanzeige 91 aufweist, die über beleuchtbare Skalensegmente 92 verfügt. Neben den Skalensegmenten 92 sind in der hier gezeigten Ausführungsform Skalenbeschriftungen 93 zur Anzeige eines Geschwindigkeitswertes dargestellt, wobei die Geschwindigkeit durch einen Zeiger 94 angezeigt wird, der über einen nicht dargestellten Antrieb gesteuert wird. Neben der gezeigten Geschwindigkeitsanzeige können weitere Zeigeranzeigen 95 sowie Symbolfeldanzeigen 96 in das Anzeigeinstrument 90 integriert sein und für einen Fahrer bei der Steuerung des Fahrzeugs sichtbar sein. In einer erfindungsgemäßen Betriebsart werden die Skalensegmente 92 dazu benutzt, einen geänderten Lenkradeinschlag darzustellen. Die Funktion der einzelnen Skalensegmente entspricht dabei der Bedeutung der Anzeigeelemente 48 bzw. 62 und 76, 77 gemäß den Figuren 3 bis 5. Damit ist es möglich, die Skalensegmente 92 sowohl für die Geschwindigkeitsanzeige und gegebenenfalls für eine Tempomatanzeige einerseits sowie für eine Anzeige von Hinweisen an den Fahrer zum Einparken in eine Parklücke zu nutzen. Hierbei wird ausgenutzt, dass ein Fahrer sich beim Einparken im Allgemeinen mit einer recht niedrigen Geschwindigkeit bewegt, so dass eine Geschwindigkeitsinformation für ihn im Allgemeinen irrelevant ist. Daher wird in einer bevorzugten Ausführungsform der Zeiger 94 bei einem Einparkvorgang aus dem Blickfeld des Fahrers bewegt bzw. an einen Rand der Skala gestellt. Entsprechend der Ansteuerung der einzelnen Beleuchtungsfelder, wie sie anhand der Figuren 3 bis 5 erläutert wurde, wird eines der Zahlensegmente in der Skala angesteuert, wobei ein Geschwindigkeitswert von 0 km/h einem äußeren linken Rand bzw. einem Lenkhinweis sehr stark nach links entspricht, während ein Skalenwert am Skalenende bei 200 km/h einem Lenkausschlag nach rechts entspricht. Eine unveränderte Lenkung wird in dem Unterstützungsbetrieb für ein Einparken durch ein entsprechendes, wahlweise betreibbares Hinweissymbol dargestellt, das dem Fahrer als ein Referenzpunkt 97 dient. Entsprechend kann eine Darstellung der erforderlichen Lenkkorrektur auch durch einen Skalenstrich erfolgen, der entsprechend gefärbt an der Skala angeordnet ist. In einer bevorzugten Ausführungsform können die Geschwindigkeitswerte im Parkbetrieb dadurch ausgeblendet werden, dass ihre Hinterleuchtung unterbleibt.

Zum Umschalten von dem Geschwindigkeitsbetrieb auf die Unterstützung eines Einparkvorganges ist gemäß der Figur 1 in dem Anzeigeinstrument 90 eine Umschalteinheit 31 vorgesehen, die zwischen der Anzeige des Geschwindigkeitswertes und der Ausgabe einer vorzunehmenden Lenkänderung umschaltet. Bevorzugt ist eine Geschwindigkeitsgrenze von z.B. 5 km/h vorgesehen, oberhalb der automatisch wieder auf die Geschwindigkeitsanzeige umgeschaltet wird. Die Geschwindigkeit von 5 km/h sollte hierbei mindestens für drei Sekunden oder z.B. um mindestens 5 km/h überschritten werden, je nach dem was zuvor eintritt, damit die Unterstützung abschaltet. Eine Abschaltung der Unterstützung erfolgt auch dann, wenn der angezeigte Differenzlenkwinkel durch den Fahrer nicht oder nicht rechtzeitig ausgeglichen wird. In diesem Fall schaltet die Anzeige ab und es wird bevorzugt ein Warnton über die akustische Ausgabeeinheit 23 ausgegeben.

An Stelle des Geschwindigkeitsmessers kann auch die Anzeige des Drehzahlmessers oder eine andere Zeigeranzeige in dem Anzeigeinstrument 90 für die Darstellung eines zu ändernden Lenkwinkels verwendet werden. Ferner kann auch die Anzeige einer Vorwahlgeschwindigkeit für ein geschwindigkeitsgeregeltes Folgefahren hierzu verwendet werden, da hierbei eine Doppelnutzung stattfinden kann, da das Einparken und ein geschwindigkeitsgeregeltes Folgefahren nicht gleichzeitig verwendet werden können. Hierzu kann eine dafür vorgesehene Matrixanzeige innerhalb des Anzeigeinstrumentes 90 für die Ausgabe verwendet werden. In einer ersten Ausführungsform ist das Anzeigeinstrument 90 durch mechanisch realisierte Zeigeranzeigen realisiert. In einer weiteren Ausführungsform kann das Anzeigeinstrument 90 auch insgesamt als eine Matrixanzeige dargestellt sein, wobei die Skalensegmente 92 sowie der Zeiger 94 und die Skalenbeschriftung 93 lediglich für die Darstellung in einem Bildschirm einer Anzeige berechnet und auf diesem Bildschirm dargestellt werden. Eine entsprechende Darstellung der Skalensegmente erfolgt dann ebenfalls durch eine Berechnung eines entsprechenden Anzeigebildes.

Ein weiteres Ausführungsbeispiel für eine Anzeige ist in einem frei programmierbaren Kombünstrument 100 dargestellt, bei dem z.B. in einer entsprechend großen variablen Anzeige, z.B. einer Flüssigkristallanzeige, eine beliebig programmierbare, bildliche Darstellung von Anzeigen und Messergebnissen erfolgt. Ein Leuchtpunkt 101 zur Anzeige eines zu korrigierenden Lenkwinkels bewegt sich entlang einer Skala 102, an der weitere Bezeichnungen und Beschriftungen, wie zum Beispiel Geschwindigkeitswerte, ausgeblendet sind. Durch eine entsprechende Symboldarstellung 103 wird dem Fahrer angezeigt, dass ein Einparkvorgang ausgelöst ist, während ein weiteres Symbol 104 ihm anzeigt, dass er selbst eine Lenkkorrektur vornehmen muss. Ein Referenzpunkt 105 ist bevorzugt so angeordnet, dass sich der Referenzpunkt mit einer Geschwindigkeit von 100 km/h ungefähr deckt. Anstelle einer Darstellung durch ein Anzeigeelement kann der Referenzpunkt 97 auch durch einen Aufdruck auf einem Zifferblatt dargestellt werden.

Anhand der Figuren 7 und 8 wurde eine Anzeige an einem Skaleninstrument erläutert, das insbesondere ein flaches Zifferblatt aufweist. Jedoch sind auch Zeigerinstrumente bekannt, die im Wesentlichen eine runde oder elliptische Form aufweisen und von einem entsprechenden Gehäuse eingefasst werden. Entsprechend einer Anordnung am Rande eines Anzeigeinstrumentes gemäß der Figur 1 kann eine erfindungsgemäße Anzeigeeinheit auch in einen solchen, eine Skala umgebenden Rand einer Zeigeranzeige eingebracht sein. In einer weiteren Ausführungsform ist es auch möglich, dass ein Zeigerinstrument gesondert nur für die Anzeige einer zu korrigierenden Lenkrichtung in einem Anzeigeinstrument vor dem Fahrer vorgesehen wird.

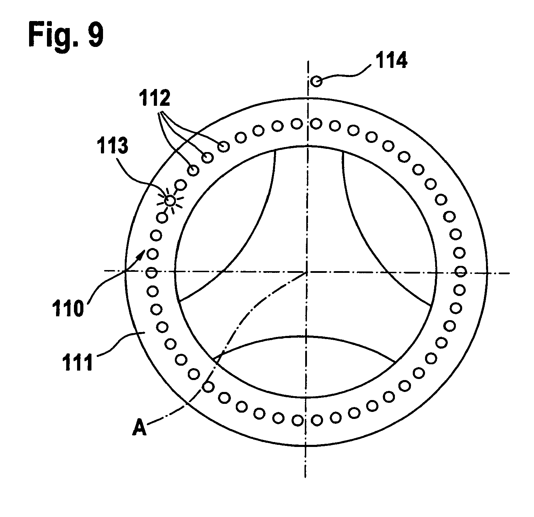

In der Figur 9 ist ein weiteres Ausführungsbeispiel einer erfindungsgemäßen Anzeigeeinheit 110 gezeigt, die in ein Lenkrad 111 des Fahrzeugs integriert ist. Einzelne Leuchtpunkte 112 sind benachbart zueinander angeordnet, wobei zur Anzeige einer vorzunehmenden Lenkänderung ein Leuchtpunkt angesteuert wird, hier das Leuchtelement 113. Die Aufgabe des Fahrers ist es nun, das Leuchtelement 113 mit einem Referenzpunkt 114 in Deckung zu bringen. Der Referenzpunkt 114 kann in einer bevorzugten Ausführung die 12-Uhr-Position des Lenkrades 111 sein, das um die Drehachse A gedreht wird. In einer weiteren Ausführungsform kann jedoch auch eine zusätzliche Beleuchtung oder Markierung des Referenzpunktes 114 außerhalb des Lenkrades vorgesehen sein. Die Anzeige 110 kann entsprechend den anhand der Figuren 3 bis 8 erläuterten Anzeigeeinheiten variiert werden. So können zum Beispiel zwei Skalen angeordnet werden. Bevorzugt sind die Beleuchtungselemente 110 rundherum um das Lenkrad angeordnet. Ebenso sind die Elemente bevorzugt so ansteuerbar, dass sie verschiedenfarbig aufleuchten können. Sollte das Lenkrad mehrfach gedreht werden, wird in geeigneter Weise hierauf hingewiesen, zum Beispiel durch ein Blinken des jeweiligen Beleuchtungsfeldes. Der Fahrer weiß nun, dass er nicht lediglich das beleuchtete Anzeigeelement auf den Referenzpunkt ausrichten muss, sondern eine zusätzliche Drehung des Lenkrades vornehmen muss.

## Patentansprüche

1. Anzeigeeinheit zur Darstellung eines zu ändernden Lenkradeinschlags eines Fahrzeugs, wobei dem Fahrer mit dem zu ändernden Lenkradeinschlag angezeigt wird, **dadurch gekennzeichnet dass** angezeigt wird in welchem Umfang und in welche Richtung die eingeschlagene Lenkrichtung des Fahrzeugs zu ändern ist, damit sich das Fahrzeug in die richtige Richtung fortbewegt, mit einer Vielzahl benachbart zueinander angeordneter Anzeigeelemente (33, 48, 62, 76, 105, 112, 113), die wahlweise zur Anzeige des zu ändernden Lenkradeinschlags beleuchtbar sind.

2. Anzeigeeinheit nach Anspruch 1, **dadurch gekennzeichnet, dass** es von dem zu ändernden Lenkradeinschlag abhängt, welches oder welche Anzeigeelemente beleuchtet werden.

3. Anzeigeeinheit nach einem der vorherigen Ansprüche, **dadurch gekennzeichnet, dass** beleuchtete Anzeigeelemente (33, 48, 62, 76, 105, 112, 113) in Abhängigkeit von dem Umfang des zu ändernden Lenkradeinschlags farblich unterschiedlich beleuchtbar sind.

4. Anzeigeeinheit nach einem der vorherigen Ansprüche, **dadurch gekennzeichnet, dass** die Anzeigeeinheit (40, 70, 80, 90, 100) im Bereich einer Instrumententafel (44) des Fahrzeugs (2) angeordnet ist.

5. Anzeigeeinheit nach Anspruch 4, **dadurch gekennzeichnet, dass** die Anzeigeeinheit (40, 70, 80) am Rand einer Anzeigeeinrichtung zur Ausgabe weiterer Informationen (43, 71, 79) angeordnet ist.

6. Anzeigeeinheit nach einem der Ansprüche 4-5, **dadurch gekennzeichnet, dass** die Anzeigeelemente (92, 102) Teil einer Skala (91) einer Zeigeranzeige oder einer freiprogrammierbaren Anzeige (100) sind.

7. Anzeigeeinheit nach Anspruch 6, **gekennzeichnet durch** eine Umschalteeinheit (31) zur Umschaltung zwischen einer Anzeige eines zu ändernden Lenkradeinschlags und einer der Skala oder der freiprogrammierbaren Anzeige ansonsten zugeordneten Anzeigefunktion.

8. Anzeigeeinheit nach einem der vorherigen Ansprüche, **dadurch gekennzeichnet, dass** die Anzeigeeinheit (60) derart im Fahrzeug angeordnet sind, dass die Anzeigeelemente (62) in einem Rückspiegel sichtbar sind oder dann für einen Fahrer sichtbar sind, wenn sich der Fahrer in Richtung einer Rückscheibe dreht.

9. Anzeigeeinheit nach einem der vorherigen Ansprüche, **dadurch gekennzeichnet, dass** der zu ändernde Lenkradeinschlag in Bezug auf einen Referenzpunkt (56, 75, 97, 105, 114) dargestellt wird.

10. Verwendung einer Anzeigeeinheit nach einem der vorherigen Ansprüche zur Anzeige einer Parklückenlänge.

11. Verfahren zur Anzeige eines zu ändernden Lenkradeinschlags eines Fahrzeugs mit einer Vielzahl benachbart zueinander angeordneter Anzeigeelemente, die wahlweise zur Anzeige des zu ändernden Lenkradeinschlags beleuchtbar sind, wobei dem Fahrer mit dem zu ändernden Lenkradeinschlag angezeigt wird, **dadurch gekennzeichnet dass** angezeigt wird in welchem Umfang und in welche Richtung die eingeschlagene Lenkrichtung des Fahrzeugs zu ändern ist, damit sich das Fahrzeug in die richtige Richtung fortbewegt.

12. Verfahren nach Anspruch 11, **dadurch gekennzeichnet, dass** die Änderung des Lenkradeinschlags aus einem Vergleich eines aktuell eingestellten Lenkradeinschlags mit einem berechneten Fahrweg des Fahrzeugs ermittelt wird, insbesondere ein Fahrweg zum Einparken des Fahrzeugs in eine Parklücke.

## Claims

1. Display unit for displaying a steering lock, to be changed, of a vehicle, **characterized in that**, with the steering lock angle to be changed, the degree to which and the direction into which the current steering direction of the vehicle is to be changed are indicated to the driver so that the vehicle moves on in the correct direction, having a plurality of display elements (33, 48, 62, 76, 105, 112, 113) which are arranged adjacent to one another and which can optionally be illuminated in order to display the steering lock angle to be changed.

2. Display unit according to Claim 1, **characterized in that** which display element or elements are illuminated depends on the steering lock angle to be changed.

3. Display unit according to one of the preceding claims, **characterized in that** illuminated display elements (33, 48, 62, 76, 105, 112, 113) can be illuminated in different colours as a function of the scope of the steering lock angle to be changed.

4. Display unit according to one of the preceding claims, **characterized in that** the display unit (40, 70, 80, 90, 100) is arranged in the region of an instrument panel (44) of the vehicle (2).

5. Display unit according to Claim 4, **characterized in that** the display unit (40, 70, 80) is arranged at the edge of a display device for outputting further information (43, 71, 79).

6. Display unit according to one of Claims 4-5, **characterized in that** the display elements (92, 102) are part of a scale (91) of a pointer display or a freely programmable display (100).

7. Display unit according to Claim 6, **characterized in that** a switch unit (31) for switching between a display of a steering lock angle to be changed and a display function which is assigned in some other way to the scale or to the freely programmable display.

8. Display unit according to one of the preceding claims, **characterized in that** the display unit (60) is arranged in the vehicle in such a way that the display element (62) can be seen in a rear view mirror or can be seen by the driver if the driver rotates in the direction of a rear view mirror.

9. Display unit as claimed in one of the preceding claims, **characterized in that** the steering lock angle to be changed is displayed with respect to a reference point (56, 75, 97, 105, 114).

10. Use of a display unit according to one of the preceding claims for displaying the length of a parking space.

11. Method for displaying a steering lock angle, to be changed, of a vehicle having a plurality of display elements which are arranged adjacent to one another and which can be illuminated optionally in order to display the steering lock angle to be changed, **characterized in that**, with the steering lock angle to be changed, the degree to which and the direction into which the current steering direction of the vehicule is to be changed are indicated to the driver so that the vehicle moves on in the correct direction.

12. Method according to Claim 11, **characterized in that** the change in the steering lock angle is determined from a comparison between a currently set steering lock angle and a calculated path of the vehicle, in particular a path for parking the vehicle in a parking space.

## Revendications

1. Unité d'affichage pour présenter un braquage de volant à modifier sur un véhicule, selon lequel, on affiche pour le conducteur le braquage de volant à modifier,
**caractérisée en ce qu'**
on affiche l'importance et la direction dans laquelle la direction braquée du véhicule doit être modifiée pour que le véhicule se déplace dans la bonne direction, à l'aide d'un grand nombre d'éléments d'affichage séparés (33, 48, 62, 76, 105, 112, 113), qui sont éclairés sélectivement pour afficher le braquage de volant à modifier.

2. Unité d'affichage selon la revendication 1,
**caractérisée en ce que**
l'éclairage duquel ou desquels éléments d'affichage dépend du braquage de volant à modifier.

3. Unité d'affichage selon l'une quelconque des revendications précédentes,
**caractérisée en ce que**
les éléments d'affichage éclairés (33, 48, 62, 76, 105, 112, 113) sont éclairés avec des couleurs différentes en fonction de l'importance du braquage de volant à modifier.

4. Unité d'affichage selon l'une quelconque des revendications précédentes,
**caractérisée en ce que**
l'unité d'affichage (40, 70, 80, 90, 100) est installée au niveau du tableau de bord (44) du véhicule (2).

5. Unité d'affichage selon la revendication 4,
**caractérisée en ce que**
l'unité d'affichage (40, 70, 80) est prévue au bord d'une installation d'affichage pour émettre d'autres informations (43, 71, 79).

6. Unité d'affichage selon l'une quelconque des revendications 4 à 5,
**caractérisée en ce que**
les éléments d'affichage (90, 102) font partie d'une échelle (91) d'un afficheur à aiguille ou d'un afficheur (100) programmable librement.

7. Unité d'affichage selon la revendication 6,
**caractérisée par**
une unité de commutation (31) pour commuter entre un affichage d'un braquage de volant à modifier et de l'une des échelles ou de l'affichage programmable librement avec une autre fonction d'affichage associée.

8. Unité d'affichage selon l'une quelconque des revendications précédentes,
**caractérisée en ce que**
l'unité d'affichage (60) est associée à un véhicule de façon que les éléments d'affichage (62) apparaissent dans le rétroviseur ou apparaissent pour le conducteur lorsque celui-ci se tourne en direction de la lunette arrière.

9. Unité d'affichage selon l'une quelconque des revendications précédentes,
**caractérisée en ce que**
le braquage de volant à modifier est représenté par rapport à un point de référence (56, 75, 97, 105, 114).

10. Application d'une unité d'affichage selon l'une quelconque des revendications précédentes pour afficher une longueur d'emplacement de rangement du véhicule.

11. Procédé d'affichage d'un braquage de volant à modifier d'un véhicule comportant un grand nombre d'éléments d'affichage installés les uns à côté des autres et qui s'éclairent sélectivement pour afficher le braquage de volant à modifier, et le braquage de volant à modifier étant affiché pour le conducteur,
**caractérisé en ce qu'**
on affiche l'amplitude et la direction de braquage à modifier pour la direction de braquage prise pour le véhicule afin que celui-ci se déplace dans la bonne direction.

12. Procédé selon la revendication 11,
**caractérisé en ce que**
la variation du braquage de volant se détermine par la comparaison du braquage de volant actuellement réglé et d'une course calculée du véhicule notamment de la trajectoire pour ranger un véhicule dans un emplacement de parking.
